# EUROPÄISCHE PATENTANMELDUNG

(11) **EP 3 805 033 A1**
(43) Veröffentlichungstag der Anmeldung: **14.04.2021**
(21) Anmeldenummer: 20197645.3
(22) Anmeldetag: 23.09.2020
(51) Int. Cl.: B60L 1/00, B60L 58/20

(54) **ELEKTRISCHES BORDNETZ SOWIE VERFAHREN ZUM BETRIEB EINES SOLCHEN BORDNETZES**

(30) Priorität: 10.10.2019 DE 102019215517
(71) Anmelder: VOLKSWAGEN AG, 38440 Wolfsburg (DE)
(72) Erfinder: Stolz, Markus, 38471 Rühen (DE); Fleischer, Rainer, 38444 Wolfsburg (DE)

(57) **Zusammenfassung**

Die Erfindung betrifft Elektrisches Bordnetz (4) für ein elektrisch angetriebenes Kraftfahrzeug (2). Das Bordnetz (4) weist eine Traktionsbatterie (HV-Batterie, 6) mit einem ersten Batterieanschluss (8) und mit einem zweiten Batterieanschluss (10) zur Bereitstellung einer Spannung, einen ersten Strompfad (14) zwischen dem ersten Batterieanschluss (8) und einem ersten Anschluss (16) für eine Hochvoltkomponente (22,24,26,27) sowie einen zweiten Strompfad (18) zwischen dem zweiten Batterieanschluss (10) und einem zweiten Anschluss (20) für die Hochvoltkomponente (22,24,26,27) auf. Dabei ist in den ersten Strompfad (28) ein elektrischer oder elektromagnetischer erster Schalter (28) und in den zweiten Strompfad (18) ein elektrischer oder elektromagnetischer zweiter Schalter (30) geschaltet. Weiterhin weist das Bordnetz (4) einen Gleichspannungswandler (32) auf, welcher ausgangsseitig mit einem Niedervoltnetz (46) verbunden ist, wobei ein erster Eingang (34) des Gleichspannungswandlers (32) mit einem ersten Abgriff (36) im ersten Strompfades (14) zwischen dem ersten Batterieanschluss (8) und dem ersten Schalter (28) verbunden ist, und wobei ein zweiter Eingang (38) des Gleichspannungswandlers (32) mit einem zweiten Abgriff (40) im zweiten Strompfad (18) zwischen dem zweiten Schalter (30) und dem zweiten Lastanschluss (20) verbunden ist. Des Weiteren betrifft die Erfindung ein Verfahren zum Betrieb des Bordnetzes (4) sowie ein elektrisch angetriebenes Kraftfahrzeug (2) mit einem solchen Bordnetz (4).

## Beschreibung

Die Erfindung betrifft ein elektrisches Bordnetz für ein elektrisch angetriebenes Kraftfahrzeug, mit einer Traktionsbatterie sowie mit einem Gleichspannungswandler. Des Weiteren betrifft die Erfindung ein Verfahren zum Betrieb eines solchen Bordnetzes sowie ein elektrisch angetriebenes Kraftfahrzeug mit einem Solchen.

Ein elektrisch angetriebenes Kraftfahrzeug weist typischerweise ein elektrisches Bordnetz mit einer Traktionsbatterie (Hochvolt, HV-Batterie) auf. Dabei ist unter einem elektrisch angetriebenen Kraftfahrzeug insbesondere ein Elektrofahrzeug, welches die zum Antrieb notwendige Energie lediglich in der Traktionsbatterie speichert (BEV, battery electric vehicle), ein Elektrofahrzeug mit einem Reichweitenverlängerer (REEV, range extended electric vehicle), ein Hybridfahrzeug (HEV, hybrid electric vehicle), ein Plug-In-Hybridfahrzeug (PHEV, plug-in hybrid electric vehicle) und/oder ein Brennstoffzellenfahrzeug (FCEV, fuel cell electric vehicle) zu verstehen, welches die mittels einer Brennstoffzelle erzeugte elektrische Energie in der Traktionsbatterie zwischenspeichert.

Die Traktionsbatterie stellt dabei eine Hochspannung, also eine Spannung mit einem Betrag größer als 60 V bereit. Somit kann mittels der Traktionsbatterie ein Hochvoltverbraucher, wie beispielsweise ein Elektromotor zum Antrieb des Kraftfahrzeugs, mit Energie versorgt werden.

Beispielsweise weist das Bordnetz zusätzlich ein als Niedervoltnetz bezeichnetes Teilnetz mit einer Spannung bis 60 V auf, wobei in dieses ein oder mehrere sicherheitsrelevante Niedervoltverbraucher geschaltet ist bzw. sind. Unter einem "sicherheitsrelevanten Verbraucher" ist dabei ein Verbraucher zu verstehen, welcher eine Funktion zur Sicherung, insbesondere die Unversehrtheit, des Kraftfahrzeugs, der Insassen und/oder anderer Verkehrsteilnehmer erfüllt. Solche sicherheitsrelevanten Verbraucher werden beispielsweise gemäß ISO 26262 (allgemeiner IEC 61508) einer Risikoklasse zugeordnet. Beispielsweise sind sicherheitsrelevante Niedervoltverbraucher des Kraftfahrzeugs ein Licht, ein Bremssystem, eine Lenkung, eine Wankstabilisierung oder ein Airbag. Sicherheitsrelevante Verbraucher sind abzugrenzen von einem Komfortverbraucher, welcher eine oder mehrere Komfortfunktionen erfüllt. Beispielsweise ist eine Sitzverstellung, ein Audiosystem ein Komfortverbraucher. Insbesondere ergibt sich für sicherheitsrelevante Verbraucher regelmäßig, z.B. aus den genannten Normen, die Anforderung einer redundanten Energieversorgung. Eine derartige redundante Energieversorgung der sicherheitsrelevanten Niedervoltverbraucher ist insbesondere für einen autonomen oder teilautonomen Betrieb des Kraftfahrzeugs relevant.

Der Erfindung liegt die Aufgabe zugrunde, ein geeignetes Bordnetz anzugeben. Insbesondere soll dabei eine redundante Energieversorgung eines sicherheitsrelevanten Niedervoltverbrauchers zuverlässig und/oder in möglichst komponentensparender Weise erfolgen. Des Weiteren soll ein Verfahren zum Betrieb eines solchen Bordnetzes sowie ein elektrisch angetriebenes Kraftfahrzeug mit einem solchen Bordnetz angegeben werden.

Bezüglich des elektrischen Bordnetzes wird diese Aufgabe erfindungsgemäß gelöst durch die Merkmale des Anspruchs 1. Hinsichtlich des Verfahrens wird die Aufgabe mit den Merkmalen des Anspruchs 5 und bezüglich des elektrisch angetriebenen Kraftfahrzeugs mit den Merkmalen des Anspruchs 8 erfindungsgemäß gelöst. Vorteilhafte Ausgestaltungen und Weiterbildungen sind Gegenstand der Unteransprüche. Dabei gelten die Ausführungen im Zusammenhang mit dem elektrischen Bordnetz sinngemäß auch für das Verfahren sowie für das elektrisch angetriebene Kraftfahrzeug und umgekehrt.

Das elektrische Bordnetz, im Folgenden kurz auch als Bordnetz bezeichnet, ist für ein elektrisch angetriebenes Kraftfahrzeug vorgesehen und eingerichtet. Das Bordnetz weist eine Traktionsbatterie mit einem ersten und mit einem zweiten Batterieanschluss auf. Die Traktionsbatterie (Hochvoltbatterie, HV-Batterie) stellt an deren Batterieanschlüssen eine Hochspannung bereit. Dabei ist unter einer Hochspannung eine elektrische Spannung mit einem Betrag größer als 60 V zu verstehen. Beispielsweise beträgt die von der Traktionsbatterie bereitgestellte Spannung 400 V oder 800 V. Hierzu sind geeigneter Weise der Pluspol der Traktionsbatterie mit dem ersten Batterieanschluss und der Minuspol der Traktionsbatterie mit dem zweiten Batterieanschluss elektrisch verbunden.

Des Weiteren umfasst das Bordnetz einen ersten Strompfad zwischen dem ersten Batterieanschluss und einem ersten Anschluss für eine Hochvoltkomponente. Der erste Anschluss für die Hochvoltkomponente wird hier und im Folgenden auch als erster Komponentenanschluss bezeichnet. Dabei ist im ersten Strompfad zwischen dem ersten Batterieanschluss und dem ersten Komponentenanschluss ein elektrischer oder elektromagnetischer erster Schalter angeordnet. Dieser ist bei entsprechender Ansteuerung stromsperrend schaltbar. Der erste Schalter ist vorzugsweise als ein Schütz ausgebildet.

Zusammenfassend ist der erste Batterieanschluss elektrisch mit dem ersten Komponentenanschluss verbunden, wobei der erste Schalter zwischen den ersten Batterieanschluss und den ersten Komponentenanschluss geschaltet ist.

In analoger Weise hierzu umfasst das Bordnetz weiterhin einen zweiten Strompfad zwischen dem zweiten Batterieanschluss und einem zweiten Anschluss für die Hochvoltkomponente, welcher zweite Anschluss im Folgenden auch als zweiter Komponentenanschluss bezeichnet wird. Dabei ist zwischen dem zweiten Batterieanschluss und dem zweiten Komponentenanschluss ein elektrischer oder elektromagnetischer zweiter Schalter angeordnet. Dieser kann bei entsprechender Ansteuerung stromsperrend geschaltet werden. Der zweite Schalter ist vorzugsweise ebenfalls als ein Schütz ausgebildet.

Die Hochvoltkomponente ist dabei insbesondere ein Verbraucher, wie beispielsweise ein Elektromotor, oder ein Klimakompressor, oder alternativ eine Ladedose, mittels welcher der Traktionsbatterie zum Laden ein Ladestrom zuführbar ist.

Des Weiteren weist das Bordnetz einen Gleichspannungswandler auf. Ein erster Eingang des Gleichspannungswandlers ist dabei mit einem ersten Abgriff im ersten Strompfad elektrisch verbunden, welcher erste Abgriff zwischen dem ersten Batterieanschluss und dem ersten Schalter angeordnet ist. Ein zweiter Eingang des Gleichspannungswandlers ist elektrisch mit einem zweiten Abgriff im zweiten Strompfad verbunden, welcher zweite Abgriff zwischen dem zweiten Schalter und dem zweiten Komponentenanschluss angeordnet ist.

Der Gleichspannungswandler ist ausgangsseitig an ein Niedervoltnetz angeschlossen. Mit anderen Worten ist an den Ausgansanschlüssen des Gleichspannungswandlers das Niedervoltnetz angeschlossen. Dabei ist an den Ausgansanschlüssen eine zum Betrieb von Niedervolt-Verbrauchern des Niedervoltnetzes geeignete Niederspannung bereitgestellt. Unter "Niedervolt" oder "Niederspannung" ist hierbei eine Spannung mit einem Betrag kleiner oder gleich 60 V, beispielsweise 24 V oder 48 V, insbesondere 12 V, zu verstehen.

Mittels des Gleichspannungswandlers wird also die von der Traktionsbatterie bereitgestellte Hochspannung in eine Niederspannung gewandelt, so dass die Niedervoltverbraucher, insbesondere ein sicherheitsrelevanter Niedervoltverbraucher, des Niedervoltnetzes anhand des Gleichspannungswandlers von der Traktionsbatterie mit elektrischer Energie, insbesondere redundant zur einer in das Niedervoltnetz geschalteten Batterie, versorgt werden können und gegebenenfalls auch werden.

Bei einer stromsperrenden Schaltung des ersten Schalters ist der erste Komponentenanschluss elektrisch vom ersten Batterieanschluss getrennt. Auf diese Weise ist die an den Komponentenanschlüssen angeschlossene Hochvoltkomponente bei einem Fehlerfall dieser Komponente abschaltbar und zweckmäßig auch abgeschaltet. Besonders vorteilhaft ist dabei weiterhin der Gleichspannungswandler von der Traktionsbatterie mit einer Spannung beaufschlagt, so dass die sicherheitsrelevanten Niedervoltverbraucher des Niedervoltnetzes weiterhin von der Traktionsbatterie mit Energie versorgbar sind.

Ein zusätzliches Schaltelement zwischen dem ersten Batterieanschluss und dem ersten Eingang des Gleichspannungswandlers zum reversiblen Unterbrechen dieses Strompfades sind vorteilhafterweise nicht notwendig.

Gemäß einer vorteilhaften Ausgestaltung des Bordnetzes ist der Gleichspannungswandler als ein Gleichspannungswandler mit galvanischer Trennung ausgebildet. Mit anderen Worten sind die Eingänge des Gleichspannungswandlers nicht elektrisch leitend mit den Ausgängen des Gleichspannungswandlers verbunden. Beispielsweise wird als Kopplungsglied zwischen Eingängen und Ausgängen ein Transformator verwendet. Auf diese Weise ist eine Potentialtrennung zwischen der Eingangsseite und der Ausgangsseite des Gleichspannungswandlers realisiert und/oder eine Übertragung eines Fehlers, wie beispielsweise eines Überstroms, einer Überspannung oder einer Spannungsspitze auf das Niedervoltnetz vermieden.

Vorzugsweise ist der Gleichspannungswandler abschaltbar, so dass, sofern keine Versorgung der Niedervoltverbraucher durch die Traktionsbatterie mittels des Gleichspannungswandlers erfolgt, eine Entladung oder eine Tiefenentladung der Traktionsbatterie vermieden ist.

Gemäß einer vorteilhaften Weiterbildung des Bordnetzes ist ein erstes Sicherungselement zwischen den ersten Abgriff, welcher im ersten Strompfad angeordnet ist, und den ersten Eingang des Gleichspannungswandlers geschaltet. Beispielsweise ist das erste Sicherungselement als eine Schmelzsicherung ausgebildet. Vorzugsweise ist das erste Sicherungselement als eine pyrotechnische Sicherung ausgebildet, also als eine Sicherung, bei welcher die Unterbrechung des Strompfades anhand der Zündung einer Treib- oder Sprengladung bewirkt wird. Zusammenfassend unterbricht ein solches Sicherungselement, im Falle der pyrotechnischen Sicherung bei entsprechender Ansteuerung, den Strompfad zwischen dem ersten Abgriff und dem ersten Eingang. Der erste Eingang des Gleichspannungswandlers ist also lediglich nicht reversibel vom ersten Batterieanschluss trennbar. Insbesondere sofern der zweite Schalter, beispielsweise aufgrund eines Defekts, nicht stromsperrend geschaltet werden kann, ist eine Unterbrechung des Stromflusses durch den Gleichspannungswandler mittels des ersten Sicherungselements ermöglicht. Das erste Sicherungselement erfüllt somit eine Sicherheitsfunktion.

Gemäß einer zweckmäßigen Weiterbildung ist ein zweites Sicherungselement in den ersten Strompfad zwischen den ersten Schalter und den ersten Komponentenanschluss geschaltet. Das zweite Sicherungselement dient dem elektrischen Unterbrechen des ersten Strompfades, insbesondere sofern der erste Schalter, beispielsweise aufgrund eines Defekts, nicht stromsperrend geschaltet werden kann. Das zweite Sicherungselement ist beispielsweise als eine Schmelzsicherung oder als eine pyrotechnische Sicherung ausgebildet.

In analoger Weise hierzu ist beispielsweise ein drittes Sicherungselement in den zweiten Strompfad zwischen dem zweiten Schalter und dem zweiten Lastanschuss geschaltet.

Gemäß einem Verfahren zum Betrieb eines elektrischen Bordnetzes, welches in einer der oben dargestellten Varianten ausgestaltet ist, wird im Fehlerfall der Hochvoltkomponente der erste Schalter stromsperrend geschaltet. Der zweite Schalter bleibt dabei zunächst stromleitend. Mit anderen Worten erfolgt ein einpoliges Wegschalten der Traktionsbatterie von den Komponentenanschlüssen. Infolge dessen wird die Hochvoltkomponente nicht weiter betrieben. Ein solcher Fehlerfall ist beispielsweise ein Kurzschluss in der Hochvoltkomponente, das Überschreiten einer vorgegebenen Temperatur der Hochvoltkomponente, das Überschreiten eines vorgegebenen Stroms oder einer vorgegebenen Spannung, oder eine beschädigte Isolierung.

Dabei liegt aufgrund der oben dargestellten Schaltung des Gleichspannungswandlers, nämlich aufgrund der Verbindung dessen ersten Eingangs mit dem zwischen dem ersten Batterieanschluss und dem ersten Schalter angeordneten ersten Abgriff und aufgrund der Verbindung dessen zweiten Eingangs mit dem zwischen dem zweiten Schalter und dem zweiten Komponentenanschluss angeordneten zweiten Abgriff, auch bei einpoligem Wegschalten der fehlerhaften Hochvoltkomponente die von der Traktionsbatterie bereitgestellte Hochspannung am Gleichspannungswandler an. Infolge dessen ist besonders vorteilhaft eine, insbesondere redundante, Energieversorgung der sicherheitsrelevanten Niedervoltverbraucher mittels der Traktionsbatterie auch bei einpoligem Wegschalten der Traktionsbatterie von den Komponentenanschlüssen ermöglicht.

Wenn der erste Schalter stromsperrend geschaltet ist, wird bzw. werden gemäß einer zweckmäßigen Ausgestaltung des Verfahrens lediglich ein bzw. jeder sicherheitsrelevante Niedervoltverbraucher des Niedervoltnetzes mittels des Gleichspannungswandlers von der Traktionsbatterie mit Energie versorgt. Komfortverbraucher dagegen werden nicht weiter von der Traktionsbatterie mit Energie versorgt. Hierzu sind die Komfortverbraucher beispielsweise wegschaltbar im Niedervoltnetz geschaltet oder ausschaltbar.

Gemäß einer vorteilhaften Ausgestaltung des Verfahrens wird zusätzlich zur stromsperrenden Schaltung des ersten Schalters der zweite Schalter stromsperrend geschaltet (geöffnet), wenn sich das Kraftfahrzeug im Stillstand befindet. Mit anderen Worten wird dann auch der zweite Komponentenanschluss von der Traktionsbatterie weggeschaltet, also der zweite Strompfad elektrisch unterbrochen.

Auf diese Weise ist vorteilhaft eine Beaufschlagung einer Fahrzeugkomponente, beispielsweise aufgrund einer defekten Isolation, mit einer von der Traktionsbatterie am zweiten Batterieanschluss bereitgestellten Spannung verhindert. Infolge dessen ist bei einer Berührung dieser Fahrzeugkomponente durch eine Person eine Gefahr für diese Person aufgrund dieser Spannung vermieden.

Sofern der Fehlerfall während einer Fahrt auftritt, wird zunächst der erste Schalter stromsperrend geschaltet. Sobald sich das Kraftfahrzeug im Stillstand befindet wird der zweite Schalter ebenfalls stromsperrend geschaltet. Sofern dagegen der Fehlerfall im Stillstand des Kraftfahrzeugs auftritt, werden der zweite Schalter und der erste Schalter beispielsweise zeitgleich stromsperrend geschaltet.

Gemäß einer vorteilhaften Ausgestaltung weist ein elektrisch angetriebenes Kraftfahrzeug ein Bordnetz auf, welches nach einer der oben dargestellten Varianten ausgebildet ist und zusätzlich oder alternativ nach dem Verfahren in einer der oben dargestellten Varianten betrieben wird. Insbesondere weist das Bordnetz des elektrisch angetriebenen Kraftfahrzeugs also einen Gleichspannungswandler auf, welcher ausgangsseitig mit einem Niedervoltnetz verbunden ist, wobei der erste Eingang des Gleichspannungswandlers mit dem im ersten Strompfad zwischen dem ersten Batterieanschluss und dem ersten Schalter angeordneten ersten Abgriff verbunden ist, und wobei der zweite Eingang des Gleichspannungswandlers mit dem im zweiten Strompfad zwischen dem zweiten Schalter und dem zweiten Lastanschluss angeordneten zweiten Abgriff verbunden ist.

Nachfolgend werden Ausführungsbeispiele der Erfindung anhand einer Zeichnung näher erläutert. Darin zeigen:
- Fig. 1: schematisch in einer Draufsicht ein elektrisch angetriebenes Kraftfahrzeug mit einem elektrischen Bordnetz, welches eine Traktionsbatterie sowie einen Gleichspannungswandler aufweist, mittels welchem ein Niedervoltnetz redundant von der Traktionsbatterie mit Energie versorgbar ist, und
- Fig. 2: in einem Flussdiagramm einen Verfahrensablauf zum Betrieb des Bordnetzes.

Einander entsprechende Teile und Größen sind in allen Figuren stets mit gleichen Bezugszeichen versehen.

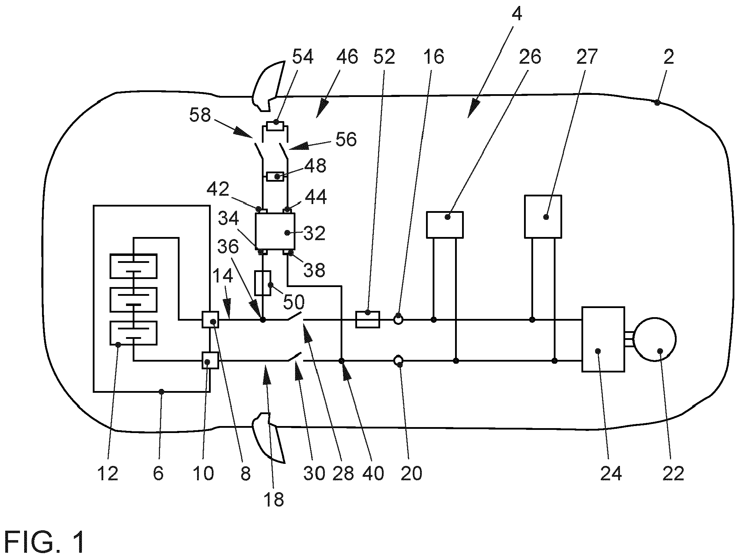

In der Fig. 1 ist ein elektrisch angetriebenes Kraftfahrzeug 2 dargestellt, dessen Bordnetz 4 eine Traktionsbatterie 6 mit einem ersten Batterieanschluss 8 und mit einem zweiten Batterieanschluss 10 umfasst. Die Traktionsbatterie 6 weist eine Anzahl an Batteriezellen 12 auf, welche parallel und/oder in Serie zueinander geschaltet sind. In der Fig. 1 sind dabei zum Zwecke einer besseren Übersicht lediglich drei Batteriezellen 12 dargestellt, welche in Serie geschaltet sind.

Weiterhin sind der Pluspol der Traktionsbatterie 6 mit dem ersten Batterieanschluss 8 und der Minuspol der Traktionsbatterie 6 mit dem zweiten Batterieanschluss 10 elektrisch verbunden. Auf diese Weise ist an den Batterieanschlüssen 8, 10 eine Hochspannung bereitgestellt.

Das Bordnetz 4 weist weiterhin einen ersten Strompfad 14 zwischen dem ersten Batterieanschluss 8 und einem ersten Komponentenanschluss 16 sowie einen zweiten Strompfad 18 zwischen dem zweiten Batterieanschluss 10 und einem zweiten Komponentenanschluss 20 auf. An den Komponentenanschlüssen 16 und 20 sind dabei ein Elektromotor 22 zum Antrieb des Kraftfahrzeugs 2 über einen Wechselrichter 24 sowie ein Hochvoltnebenverbraucher 26 angeschlossen, welcher hier als ein als Klimakompressor ausgebildet ist. Weiterhin ist eine Ladedose 27 mit den Komponentenanschlüssen 16 und 20 verbunden, so dass die Traktionsbatterie 6 aufgeladen werden kann.

Zusammenfassend werden die an die Komponentenanschlüsse 16 und 20 angeschlossenen Komponenten 22,24,26,27 als Hochvoltkomponenten bezeichnet.

In den ersten Strompfad 14 ist zwischen dem ersten Batterieanschluss 8 und dem ersten Komponentenanschluss 16 ein als Schütz ausgebildeter erster Schalter 28 geschaltet. In analoger Weise hierzu ist in den zweiten Strompfad 18 zwischen dem zweiten Batterieanschluss 10 und dem zweiten Komponentenanschluss 20 ein als Schütz ausgebildeter zweiter Schalter 30 geschaltet. Die Schalter 28 und 30 sind jeweils durch eine entsprechende Ansteuerung stromsperrend schaltbar, so dass die Komponentenanschlüsse 16, 20 elektrisch vom ersten Batterieanschluss 8 bzw. vom zweiten Batterieanschluss 10 trennbar sind.

Weiterhin weist das Bordnetz 4 einen Gleichspannungswandler 32 auf, dessen erster Eingang 34 mit einem ersten Abgriff 36 elektrisch verbunden ist, welcher erste Abgriff 36 im ersten Strompfad 14 zwischen dem ersten Batterieanschluss 8 und dem ersten Schalter 28 angeordnet ist. Ein zweiter Eingang des 38 des Gleichspannungswandlers 32 ist mit einem zweiten Abgriff 40 elektrisch verbunden, welcher zweite Abgriff 40 im zweiten Strompfad 18 zwischen dem zweiten Schalter 30 und dem zweiten Komponentenanschluss 20 angeordnet ist.

Auf diese Weise sind der erste Batterieanschluss 8, der erste Eingang 34, der zweite Eingang 38, der zweite Schalter 30 und der zweite Batterieanschluss 10 in Serie geschaltet.

Zusammenfassend ist im ersten Strompfad 14 der erste Abgriff 36 ausgehend vom ersten Batterieanschluss 8 zum ersten Komponentenanschluss 16 vor dem ersten Schalter 28 angeordnet. Im zweiten Strompfad 18 ist der zweite Abgriff 40 ausgehend vom zweiten Batterieanschluss 8 zum zweiten Komponentenanschluss 20 nach dem zweiten Schalter 30 angeordnet.

Der Gleichspannungswandler 32 ist ausgangsseitig an dessen ersten Ausgang 42 und an dessen zweiten Ausgang 44 an ein Niedervoltnetz 46 angeschlossen. Das Niedervoltnetz 46 weist dabei einen sicherheitsrelevanten (Niedervolt-)Verbraucher 48 auf, welcher von der Traktionsbatterie 6 mittels des Gleichspannungswandlers 32 redundant mit Energie versorgt werden soll und auch wird.

Hierzu wird die von der Traktionsbatterie 6 bereitgestellte (Hoch-)Spannung mittels des Gleichspannungswandlers 32 in eine zum Betrieb des sicherheitsrelevanten Verbrauchers 48 geeignete (Nieder-)Spannung gewandelt und entsprechend an den Ausgängen 42,44 bereitgestellt.

Der Gleichspannungswandler 32 ist als ein Gleichspannungswandler mit galvanischer Trennung ausgebildet, so dass eine Potentialtrennung zwischen der Eingangsseite und der Ausgangsseite des Gleichspannungswandlers 32 realisiert ist.

Das Bordnetz 4 weist erstes Sicherungselement 50 auf, welches zwischen den ersten Abgriff 36 und den ersten Eingang 34 des Gleichspannungswandlers 32 geschaltet ist. Zusätzlich weist das Bordnetz ein zweites Sicherungselement 52 auf, welches im ersten Strompfad 14 zwischen den ersten Schalter 28 und den ersten Komponentenanschluss 16 geschaltet ist.

Das erste Sicherungselement 50 und das zweite Sicherungselement 52 sind dabei jeweils als eine pyrotechnische Sicherung ausgebildet und dienen der redundanten Sicherung, insbesondere gegen einen Überstrom oder einen Kurzschluss.

Zusammenfassend ist der erste Eingang 34 des Gleichspannungswandlers 32 also lediglich nicht reversibel vom ersten Batterieanschluss 8 trennbar.

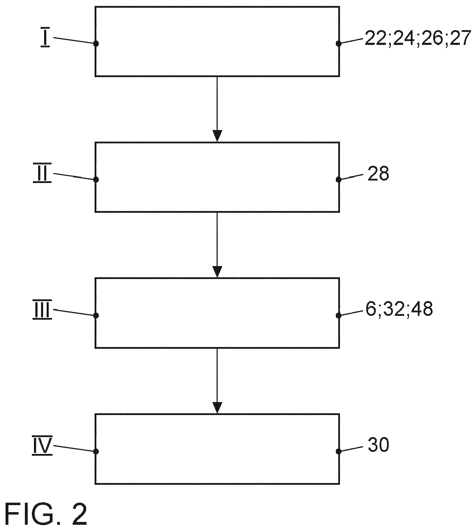

Das in der Fig. 2 dargestellte Flussdiagramm repräsentiert einen Verfahrensablauf zum Betrieb des Bordnetzes 4 gemäß der Fig. 1.

In einem ersten Schritt I wird zunächst ein Fehlerfall einer der Hochvoltkomponenten erfasst. Ein solcher Fehlerfall ist beispielsweise ein Kurzschluss in der Hochvoltkomponente, das Überschreiten einer vorgegebenen Temperatur der Hochvoltkomponente, das Überschreiten eines vorgegebenen Stroms oder einer vorgegebenen Spannung, oder eine beschädigte Isolierung. Zum Erfassen des Fehlerfalles weisen die Hochvoltkomponenten entsprechende Sensoren auf, welche in der Fig. 1 nicht weiter dargestellt sind.

In einem zweiten Schritt II wird der erste Schalter 28 stromsperrend geschaltet, wobei der zweite Schalter 30 zunächst stromleitend bleibt. Auf diese Weise wird der erste Komponentenanschluss 16 spannungsfrei geschaltet, so dass die an den Komponentenanschlüssen 16, 20 angeschlossenen Hochvoltkomponenten nicht weiter betrieben werden. Dabei liegt die von der Traktionsbatterie 6 bereitgestellte Hochspannung weiterhin am Gleichspannungswandler 32 an, so dass der sicherheitsrelevante Niedervoltverbraucher 48 weiterhin redundant mit Energie von der Traktionsbatterie 6 versorgt ist.

Ein Komfortverbraucher 54, welcher anhand der Schalter 56 und 58 an das Niedervoltnetz 46 angeschlossen ist, wird in diesem Fall durch ein stromsperrendes Schalten der Schalter 56 und/oder 58 nicht weiter mit Energie versorgt. Es erfolgt also lediglich eine redundante Energieversorgung der sicherheitsrelevanten Niedervoltverbraucher 48, wenn der erste Schalter 28 stromsperrend geschaltet ist (Schritt III).

Sobald sich das das Kraftahrzeug 2 im Stillstand befindet, wird in einem vierten Schritt IV der zweite Schalter 30 ebenfalls stromsperrend geschaltet, so dass beide Komponentenanschlüsse 16 und 20 spannungsfrei geschaltet sind.

Die Schalter 28, 30, 56 und 58 werden dabei entsprechend dem oben dargestellten Verfahren von einem nicht weiter dargestellten Steuergerät angesteuert.

Die Erfindung ist nicht auf das vorstehend beschriebene Ausführungsbeispiel beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: elektrisch angetriebenes Kraftfahrzeug
- 4: elektrisches Bordnetz
- 6: Traktionsbatterie
- 8: erster Batterieanschluss
- 10: zweiter Batterieanschluss
- 12: Batteriezelle
- 14: erster Strompfad
- 16: erster Komponentenanschluss
- 18: zweiter Strompfad
- 20: zweiter Komponentenanschluss
- 22: Elektromotor
- 24: Wechselrichter
- 26: Hochvoltnebenverbraucher
- 27: Ladedose
- 28: erster Schalter
- 30: zweiter Schalter
- 32: Gleichspannungswandler
- 34: erster Eingang
- 36: erster Abgriff
- 38: zweiter Eingang
- 40: zweiter Abgriff
- 42: erster Ausgang
- 44: zweiter Ausgang
- 46: Niedervoltnetz
- 48: sicherheitsrelevanter (Niedervolt-)Verbraucher
- 50: erstes Sicherungselement
- 52: zweites Sicherungselement
- 54: Komfortverbraucher
- 56: Schalter
- 58: Schalter

- I: Erfassen eines Fehlerfalles einer Hochvoltkomponente
- II: Stromsperrendes Schalten des ersten Schalters
- III: Energieversorgung des sicherheitsrelevanter Verbrauchers
- IV: Stromsperrendes Schalten des zweiten Schalters

## Patentansprüche

1. Elektrisches Bordnetz (4) für ein elektrisch angetriebenes Kraftfahrzeug (2), aufweisend
- eine Traktionsbatterie (6) mit einem ersten Batterieanschluss (8) und mit einem zweiten Batterieanschluss (10) zur Bereitstellung einer Hochspannung,
- einen ersten Strompfad (14) zwischen dem ersten Batterieanschluss (8) und einem ersten Komponentenanschluss (16) für eine Hochvoltkomponente (22,24,26,27) sowie einen zweiten Strompfad (18) zwischen dem zweiten Batterieanschluss (10) und einem zweiten Komponentenanschluss (20) für die Hochvoltkomponente (22,24,26,27), wobei in den ersten Strompfad (28) ein elektrischer oder elektromagnetischer erster Schalter (28) und in den zweiten Strompfad (18) ein elektrischer oder elektromagnetischer zweiter Schalter (30) geschaltet ist, und
- einen Gleichspannungswandler (32), welcher ausgangsseitig mit einem Niedervoltnetz (46) verbunden ist,
- wobei ein erster Eingang (34) des Gleichspannungswandlers (32) mit einem ersten Abgriff (36) im ersten Strompfad (14) zwischen dem ersten Batterieanschluss (8) und dem ersten Schalter (28) verbunden ist, und wobei ein zweiter Eingang (38) des Gleichspannungswandlers (32) mit einem zweiten Abgriff (40) im zweiten Strompfad (18) zwischen dem zweiten Schalter (30) und dem zweiten Komponentenanschluss (20) verbunden ist.

2. Elektrisches Bordnetz (4) nach Anspruch 1,
**dadurch gekennzeichnet,**
**dass** der Gleichspannungswandler (32) als ein Gleichspannungswandler mit galvanischer Trennung ausgebildet ist.

3. Elektrisches Bordnetz (4) nach Anspruch 1 oder 2,
**gekennzeichnet durch**
ein erstes Sicherungselement (50), welches zwischen dem ersten Abgriff (36) am ersten Strompfad (14) und dem ersten Eingang (34) des Gleichspannungswandlers (32) geschaltet ist.

4. Elektrisches Bordnetz (4) nach einem der Ansprüche 1 bis 3,
**gekennzeichnet durch**
ein zweites Sicherungselement (52), welches zwischen den ersten Schalter (28) und dem ersten Komponentenanschluss (16) in den ersten Strompfad (14) geschaltet ist.

5. Verfahren zum Betrieb eines elektrischen Bordnetzes (4) nach einem der Ansprüche 1 bis 4, wobei der erste Schalter (28) im Fehlerfall der Hochvoltkomponente (22,24,26,27) stromsperrend geschaltet wird.

6. Verfahren nach Anspruch 5, wobei, wenn der erste Schalter (28) stromsperrend geschaltet ist, lediglich ein sicherheitsrelevanter Niedervoltverbraucher (48) des Niedervoltnetzes (46) mittels des Gleichspannungswandlers (32) von der Traktionsbatterie (6) mit Energie versorgt wird.

7. Verfahren nach Anspruch 5 oder 6, wobei der zweite Schalter (30) geöffnet wird, sobald sich das Kraftfahrzeug (2) im Stillstand befindet.

8. Elektrisch angetriebenes Kraftfahrzeug (2) mit einem elektrischen Bordnetz (4), welches nach einem der Ansprüche 1 bis 4 ausgebildet ist und/oder gemäß dem Verfahren nach einem der Ansprüche 5 bis 7 betrieben wird.
